# EUROPÄISCHE PATENTSCHRIFT

(11) **EP 3 276 518 B1**
(45) Veröffentlichungstag und Bekanntmachung des Hinweises auf die Patenterteilung: **19.09.2018**
(21) Anmeldenummer: 16182111.1
(22) Anmeldetag: 29.07.2016
(51) Int. Cl.: G06F 21/12, G06F 21/31, G06F 21/62, H04W 12/08, H04W 12/06

(54) **MOBILES KOMMUNIKATIONSGERÄT MIT MEHRZAHL ÜBER EINE PIN FREISCHALTBARER ANWENDUNGEN**
MOBILE COMMUNICATION DEVICE WITH PLURALITY OF APPLICATIONS ACTIVATABLE VIA A PIN
APPAREIL DE COMMUNICATION MOBILE COMPRENANT UNE PLURALITE D'APPLICATIONS POUVANT ETRE CONNECTEES PAR UN PIN

(43) Veröffentlichungstag der Anmeldung: 31.01.2018
(73) Patentinhaber: Deutsche Telekom AG, 53113 Bonn (DE)
(72) Erfinder: Sonntag, Dr. Thomas, 53343 Wachtberg (DE)
(74) Vertreter: Patentship Patentanwaltsgesellschaft mbH

(56) Entgegenhaltungen:
- EP-A1- 2 802 116
- EP-A2- 2 063 378
- Elaheh Vahidian: "Evolution of the SIM to eSIM", , 21. Januar 2013 (2013-01-21), XP055249025, Gefunden im Internet: URL:http://www.diva-portal.org/smash/get/d iva2:617036/FULLTEXT01.pdf [gefunden am 2016-02-10]
- Simalliance: "eUICC Profile Package: Interoperable Format Technical Specification - Version 1.0", , 25. Juni 2015 (2015-06-25), XP055322173, Gefunden im Internet: URL:http://simalliance.org/wp-content/uplo ads/2015/03/Profile-interoperability-techn ical-specification_V1-0.pdf [gefunden am 2016-11-23]
- 5g Ppp Architecture Working Group: "View on 5G Architecture - Version 1.0", , 1. Juli 2016 (2016-07-01), XP055322873, Gefunden im Internet: URL:https://5g-ppp.eu/wp-content/uploads/2 014/02/5G-PPP-5G-Architecture-WP-July-2016 .pdf [gefunden am 2016-11-24]

## Beschreibung

Die vorliegende Erfindung betrifft ein mobiles Kommunikationsgerät mit SIM-Modul, auf welchem eine Mehrzahl von Anwendungen ausführbar ist, die über eine PIN (persönliche Identifikationsnummer) automatisch freischaltbar sind sowie ein Verfahren zum Freischalten zumindest einer Anwendung auf einem mobilen Kommunikationsgerät über eine PIN. Insbesondere betrifft die Erfindung ein mobiles Kommunikationsgerät, das über die Eingabe der PIN einen Kommunikationskanal über ein 5G Netzwerk aufbauen kann.
Mit zunehmender Anzahl von Telekommunikations- (TK-) Diensten und Anwendungen wächst die Anzahl der PINs, welche gemerkt und verwaltet werden müssen, wie zum Beispiel in EP2063378 A2 offenbart wird. Im 5G-Umfeld wird dieses Problem weiterhin verstärkt, weil weitere Dienste hinzukommen werden, welche Slice-basiert sind.
Im loT ("Internet of Things", Internet der Dinge)-Kontext wird eine große Zahl an Kommunikationsgeräten, Sensoren, MTC ("Machine Type Communication")-Geräten, etc. im Feld eingesetzt, welche jeweils unterschiedliche Dienste oder Anwendungen beanspruchen. Die Maintenance bzw. Pflege und Wartung der PINs für diese Geräte wird so zu einem komplexen Problem.
Es ist die Aufgabe der vorliegenden Erfindung, ein Konzept zu schaffen, um eine große Zahl an mobilen Kommunikationsgeräten, Sensoren und MTC-Geräten, welche jeweils unterschiedliche Dienste oder Anwendungen beanspruchen, im Feldeinsatz zu verwalten.
Insbesondere ist es eine Aufgabe der vorliegenden Erfindung ein Konzept zum Verwalten von mobilen Kommunikationsgeräten bezüglich der oben genannten Anforderungen in 5G-Netzwerken zu schaffen.
Diese Aufgabe wird durch die Merkmale der unabhängigen Ansprüche gelöst. Vorteilhafte Weiterbildungsformen sind Gegenstand der abhängigen Ansprüche.
Eine Grundidee der Erfindung liegt darin, eine SIM-PIN als Master-PIN zu nutzen, um so sämtliche Dienste und Anwendungen freizuschalten. Die Verwendung der SIM-PIN ist ein Gewinn an Sicherheit, denn SIMs sind in der Regel durch Hardwaresicherheitsmodule realisiert - sowohl bei klassischen Plastik-SIMs als auch bei eSIM in Form einer eUICC. Ferner ist eine SIM im Stande die Slave-SIMs in Hardware sicher zu verwalten anstatt diese in einem unsicheren Gerätespeicher zu speichern.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur.

Gemäß einem ersten Aspekt betrifft die Erfindung ein mobiles Kommunikationsgerät, auf welchem eine Mehrzahl von Anwendungen ausführbar ist, wobei jede Anwendung mittels einer Anwendungs-Identifikationsnummer freischaltbar ist, wobei das Kommunikationsgerät ein Teilnehmeridentitätsmodul (SIM) aufweist, welchem eine persönliche Identifikationsnummer (PIN) zugeordnet ist, mit: einer Benutzerschnittstelle zum Erfassen einer Eingabe der persönlichen Identifikationsnummer des Teilnehmeridentitätsmoduls; und einem Prozessor, welcher ausgebildet ist, ansprechend auf die erfasste Eingabe der persönlichen Identifikationsnummer zumindest eine Anwendung der Mehrzahl von Anwendungen mittels der Anwendungs-Identifikationsnummer, welche der zumindest einen Anwendung zugeordnet ist, automatisch freizuschalten, um die zumindest eine Anwendung auszuführen.

Dies bietet den Vorteil, dass über die Eingabe einer einzelnen persönlichen Identifikationsnummer, und zwar derjenigen, die dem SIM-Modul zugeordnet ist, sich sämtliche Anwendungen und Dienste auf dem mobilen Kommunikationsgerät freischalten lassen. Damit lassen sich eine große Zahl an mobilen Kommunikationsgeräten, Sensoren und MTC-Geräte, effizient im Feldeinsatz verwalten, da der Anwender sich nicht mehr für jede Anwendung auf einem Gerät eine eigene Anwendungs-ID merken muss, sondern dies zentral über die SIM-PIN des SIM-Moduls geschehen kann. Insbesondere ist dies im Rahmen von 5G Kommunikationsnetzen von Vorteil, da diese eine sehr große Anzahl von Diensten und Anwendungen nutzen, welche über eine einzelne SIM-PIN freigeschaltet werden können.

Gemäß einer Ausführungsform des mobilen Kommunikationsgeräts ist der Prozessor ausgebildet, ansprechend auf die erfasste Eingabe der persönlichen Identifikationsnummer jede Anwendung der Mehrzahl von Anwendungen mittels der Anwendungs-Identifikationsnummer, welche der jeweiligen Anwendung zugeordnet ist, automatisch freizuschalten.

Dies bietet den Vorteil, dass eine schnelle und wirkungsvolle Freischaltung einer großen Anzahl von Anwendungen und Diensten ermöglicht wird.

Gemäß einer Ausführungsform des mobilen Kommunikationsgeräts ist der Prozessor ausgebildet, die jeweilige Anwendungs-Identifikationsnummer an die jeweilige Anwendung zu übermitteln, um die jeweilige Anwendung freizuschalten.

Dies bietet den Vorteil, dass die Freischaltung der einzelnen Anwendungen von zentraler Stelle, d.h. durch den Prozessor, erfolgt und somit koordiniert und geplant erfolgen kann.

Gemäß einer Ausführungsform des mobilen Kommunikationsgeräts ist der Prozessor ausgebildet, die Mehrzahl von Anwendungen zu starten und die gestarteten Anwendungen mittels der persönlichen Identifikationsnummer freizuschalten.

Dies bietet den Vorteil, dass der Prozessor als zentrale Instanz eine Übersicht über die einzelnen Anwendungen hat und sie entsprechend ihren zeitlichen Anforderungen und ihrem Ressourcenverbrauch freischalten kann.

Gemäß einer Ausführungsform umfasst das mobile Kommunikationsgerät einen Speicher, in welchem die Anwendungs-Identifikationsnummern der Mehrzahl von Anwendungen gespeichert sind, und der Prozessor ist ausgebildet, die Anwendungs-Identifikationsnummern für die Freischaltung der Anwendungen aus dem Speicher auszulesen.

Dies bietet den Vorteil, dass die einzelnen Anwendungs-Identifikationsnummern nicht auf dem SIM-Modul gespeichert werden müssen, sondern in einem dafür vorgesehenen Bereich des Speichers abgelegt werden können. Dies kann ein gesicherter Bereich sein, um die entsprechende Sicherheit gegen unbefugtes Auslesen zu gewährleisten.

Gemäß einer Ausführungsform des mobilen Kommunikationsgeräts verfügt jede Anwendung der Mehrzahl von Anwendungen über eine eigene sekundäre PIN, mittels welcher sie freischaltbar ist, und die persönliche Identifikationsnummer ist eine Master-PIN, mit der alle sekundären PINs freischaltbar sind.

Dies bietet den Vorteil, dass über die Master-PIN auf einfache und effiziente Weise sämtliche sekundären PINs freischaltbar sind.

Gemäß einer Ausführungsform des mobilen Kommunikationsgeräts ist der Prozessor ausgebildet, ansprechend auf eine Übereinstimmung der erfassten PIN mit der dem Teilnehmeridentitätsmodul zugeordneten PIN die zumindest eine Anwendung freizuschalten.

Dies bietet den Vorteil, dass geprüft werden kann, ob es sich um einen berechtigten Benutzer handelt, der die PIN eingibt. Bei einem nicht berechtigten Benutzer, der nicht die richtige PIN, d.h. die dem Teilnehmeridentitätsmodul zugeordnete PIN eingibt, wird keine Anwendung freigeschaltet.

Gemäß einer Ausführungsform umfasst das mobile Kommunikationsgerät eine Management-Schnittstelle, die ausgebildet ist, die dem Teilnehmeridentitätsmodul zugeordnete PIN von einem Netzwerkbetreiber, insbesondere über einen SMDP (Subscription Manager Data Preparation)-Server zu empfangen.

Dies bietet den Vorteil, dass das mobile Kommunikationsgerät leicht den mobilen Netzwerkbetreiber wechseln kann. Es braucht hier keine neue SIM-Karte mehr gekauft und eingebaut zu werden, denn es ist möglich auf einfache Weise über die Management-Schnittstelle eine neue PIN eines neuen Netzwerkbetreibers anzufordern, beispielsweise über Download von einem SMDP-Server. Damit kann das mobile Kommunikationsgerät mit fest verbauter SIM-Karte, z.B. elektronischer SIM oder eUICC-Modul implementiert werden.

Gemäß einer Ausführungsform des mobilen Kommunikationsgeräts umfasst die Management-Schnittstelle eine Hardware-Verschaltung, die ausgebildet ist, die empfangene, dem Teilnehmeridentitätsmodul zugeordnete PIN unter Umgehung des Prozessors in einem verschlüsselten Bereich des mobilen Kommunikationsgeräts abzulegen.

Dies erhöht die Sicherheit gegen unbefugtes Ausspähen oder Abhören der über die Management-Schnittstelle übertragenen PIN, denn Schadsoftware, die sich beispielsweise auf dem Prozessor einnistet, z.B. weil dieser über ein Betriebssystem verfügt, hat nicht mehr die Möglichkeit in die physikalische Strecke zur Übertragung der PIN einzugreifen.

Gemäß einer Ausführungsform des mobilen Kommunikationsgeräts umfassen die Mehrzahl von Anwendungen folgendes: Applikationsprogramme, Dienste, Konfigurationen, Zugriff auf Speichermedien, Zugriff auf Server, Zugriff auf Kommunikationsgeräte, Anwendungen zur Netzwerkzugangssteuerung, insbesondere USIM (UMTS SIM, Universal Mobile Telecommunications System Subscriber Identity Module), CSIM (CDMA SIM, Code Division Multiple Access Subscriber Identity Module), ISIM (IMS SIM, IP Multimedia Service Identity Module); NFC ("Near Field Communication", Nahfeldkommunikation) Anwendungen.

Dies bietet den Vorteil, dass eine Vielzahl unterschiedlichster Anwendungen für unterschiedliche Netzwerkzugangstechnologien zentral gesteuert und verwaltet werden kann.

Gemäß einer Ausführungsform umfasst das mobile Kommunikationsgerät einen eUICC (embedded Universal Integrated Circuit Card bzw. electronic Universal Integrated Circuit Card)-Schaltkreis, auf dem das Teilnehmeridentitätsmodul (SIM) implementiert ist.

Dies bietet den Vorteil, dass das SIM-Modul fest in das mobile Kommunikationsgerät eingebettet ist und damit mechanische Einschübe zum Einstecken der SIM-Karte und Schnittstellen zum Koppeln der SIM-Karte an das mobile Kommunikationsgerät entfallen können. Der damit entfallende Platz kann effizienter genutzt werden, beispielsweise durch Bau eines kleineren Smartphones, das weniger Energie verbraucht, da die entfallenden Komponenten nicht mit Strom versorgt werden müssen.

Gemäß einer Ausführungsform des mobilen Kommunikationsgeräts ist der Prozessor ausgebildet, ansprechend auf die erfasste Eingabe der persönlichen Identifikationsnummer einen Kommunikationskanal über ein Netzwerk einer fünften Generation (5G) oder einer weiteren Generation aufzubauen.

Dies bietet den Vorteil, dass das mobile Kommunikationsgerät mit der Eingabe der PIN Nummer freigeschaltet werden kann, um einen Kommunikationskanal über ein 5G Kommunikationsnetzwerk aufzubauen. Damit ist das mobile Kommunikationsgerät sehr flexibel einsetzbar ohne dass das SIM-Modul bzw. das Teilnehmeridentitätsmodul ausgetauscht werden muss.

Gemäß einer Ausführungsform des mobilen Kommunikationsgeräts ist der Prozessor ausgebildet, ansprechend auf die erfasste Eingabe der persönlichen Identifikationsnummer einen Slice des Netzwerks der fünften oder weiteren Generation zu konfigurieren oder konfigurieren zu lassen. Der Prozessor kann die Konfiguration selbst vornehmen oder von einer Management-Entität im 5G Netzwerk ausführen lassen.

Dies bietet den Vorteil, dass über die Eingabe der PIN einzelne Subnetze bzw. Slices des 5G Netzwerks konfiguriert werden können. D.h. der Nutzer braucht sich nicht verschiedene Passwörter zu merken, um die erforderlichen Ressourcen und Anwendungen des 5G Netzes freischalten zu lassen. Es reicht, sich die SIM-PIN Nummer zu merken, um damit auf sämtliche Kommunikationsressourcen, -dienste und - anwendungen des 5G Netzes zugreifen zu können.

Gemäß einer Ausführungsform des mobilen Kommunikationsgeräts ist der Prozessor ausgebildet, ansprechend auf die erfasste Eingabe der persönlichen Identifikationsnummer eine Anwendung des Netzwerks der fünften oder weiteren Generation freizuschalten oder freischalten zu lassen. Der Prozessor kann die Freischaltung selbst vornehmen oder von einer Management-Entität im 5G Netzwerk ausführen lassen.

Dies bietet den Vorteil, dass über eine einzelne PIN sämtliche benötigte Anwendungen und Dienste des 5G Netzes freischaltbar sind, was die Einfachheit der Kommunikation im 5G Netz und die Anwenderfreundlichkeit spürbar verbessert.

Gemäß einem zweiten Aspekt betrifft die Erfindung ein Verfahren zum Freischalten zumindest einer Anwendung auf einem mobilen Kommunikationsgerät, auf welchem eine Mehrzahl von Anwendungen ausführbar ist, wobei jede Anwendung mittels einer Anwendungs-Identifikationsnummer freischaltbar ist, wobei das Kommunikationsgerät ein Teilnehmeridentitätsmodul (SIM) aufweist, welchem eine persönliche Identifikationsnummer (PIN) zugeordnet ist, mit: Erfassen einer Eingabe der persönlichen Identifikationsnummer des Teilnehmeridentitätsmoduls; und automatisches Freischalten zumindest einer Anwendung der Mehrzahl von Anwendungen mittels der Anwendungs-Identifikationsnummer, welche der zumindest einen Anwendung zugeordnet ist, ansprechend auf die erfasste Eingabe der persönlichen Identifikationsnummer, um die zumindest eine Anwendung auszuführen.

Ein solches Verfahren bietet den Vorteil, dass über die Eingabe einer einzelnen persönlichen Identifikationsnummer, und zwar derjenigen, die dem SIM-Modul zugeordnet ist, sich sämtliche Anwendungen und Dienste auf dem mobilen Kommunikationsgerät freischalten lassen. Damit lassen sich eine große Zahl an mobilen Kommunikationsgeräten, Sensoren und MTC-Geräte, effizient im Feldeinsatz verwalten, da der Anwender sich nicht mehr für jede Anwendung auf einem Gerät eine eigene Anwendungs-ID merken muss, sondern dies zentral über die SIM-PIN des SIM-Moduls geschehen kann. Insbesondere ist dies im Rahmen von 5G Kommunikationsnetzen von Vorteil, da diese eine sehr große Anzahl von Diensten und Anwendungen nutzen, welche über eine einzige SIM-PIN freigeschaltet werden können.

Weitere Ausführungsbeispiele werden Bezug nehmend auf die beiliegenden Zeichnungen erläutert. Es zeigen:
Fig. 1 eine schematische Darstellung eines Kommunikationssystems 100 mit mobilem Kommunikationsgerät 110, auf dem eine Mehrzahl von Anwendungen mittels PIN-Eingabe über eine Benutzer-Schnittstelle 113 freischaltbar sind, gemäß einer beispielhaften ersten Ausführungsform;
Fig. 2 eine schematische Darstellung eines Kommunikationssystems 200 mit mobilem Kommunikationsgerät 210, auf dem eine Mehrzahl von Anwendungen mittels PIN-Eingabe über eine Benutzer-Schnittstelle 113 freischaltbar sind, und einer Management-Schnittstelle 217 zum Empfangen eines Benutzerprofils gemäß einer beispielhaften zweiten Ausführungsform;
Fig. 3 eine schematische Darstellung eines Kommunikationssystems 300 mit eUICC 330 und SMDP Server 320 zum Bereitstellen eines personalisierten Profils 326 gemäß einer beispielhaften Ausführungsform;
Fig. 4 eine schematische Darstellung einer 5G Systemarchitektur 400;
Fig. 5 eine schematische Darstellung eines 5G-Kommunikationsnetzwerks mit mehreren Slices (Netzwerkscheiben) 500;
Fig. 6 eine schematische Darstellung eines 5G-Kommunikationsnetzwerkes 600 mit Kommunikationskanal 615 zur Kommunikation zwischen zwei mobilen Kommunikationsgeräten gemäß einer beispielhaften Ausführungsform; und
Fig. 7 eine schematische Darstellung eines Verfahrens 700 zum Freischalten zumindest einer Anwendung auf einem mobilen Kommunikationsgerät, auf welchem eine Mehrzahl von Anwendungen ausführbar ist, gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

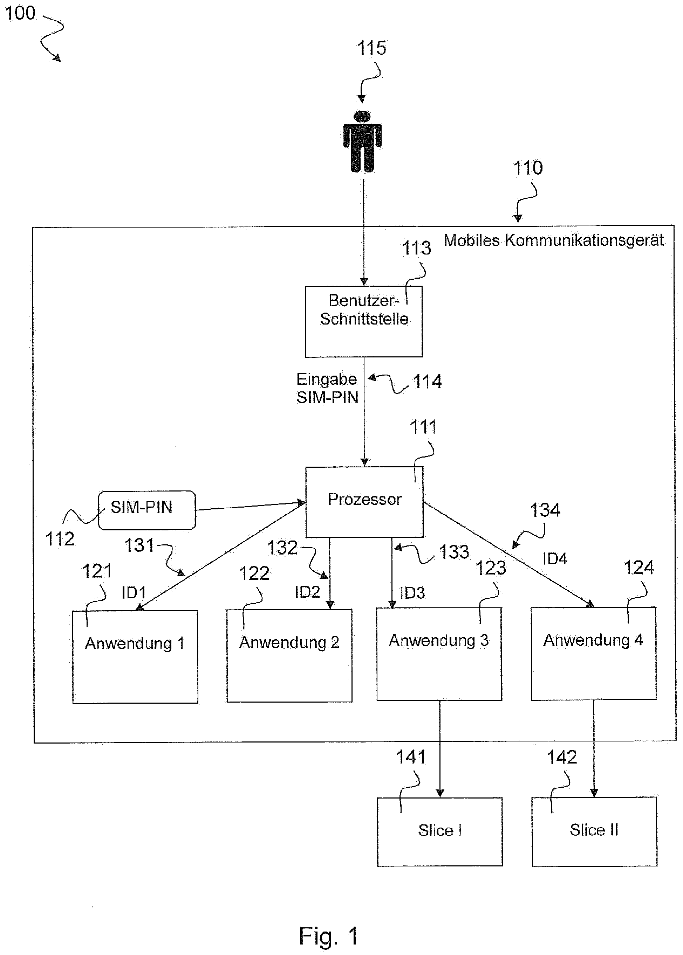

Fig. 1 zeigt eine schematische Darstellung eines Kommunikationssystems 100 mit mobilem Kommunikationsgerät 110, auf dem eine Mehrzahl von Anwendungen mittels PIN-Eingabe über eine Benutzer-Schnittstelle 113 freischaltbar sind, gemäß einer beispielhaften ersten Ausführungsform.

Auf dem mobilen Kommunikationsgerät 110 sind eine Mehrzahl von Anwendungen 121, 122, 123, 124 implementiert. Jede Anwendung ist mittels einer Anwendungs-Identifikationsnummer ID1 131, ID2 132, ID3 133, ID4 134 freischaltbar. Das Kommunikationsgerät 110 weist ein Teilnehmeridentitätsmodul (SIM, "Subscriber Identification Module") 112 auf, welchem eine persönliche Identifikationsnummer SIM-PIN zugeordnet ist. Das mobile Kommunikationsgerät 110 weist eine Benutzerschnittstelle 113 zum Erfassen einer Eingabe der persönlichen Identifikationsnummer 114 des Teilnehmeridentitätsmoduls 112 auf. Über die Benutzerschnittstelle 113 kann ein Benutzer 115 des mobilen Kommunikationsgeräts 110 eine Eingabe der SIM-PIN 114 bewirken. Die Benutzerschnittstelle 113 kann beispielsweise eine Tastatur sein zum Erfassen von Eingaben des Benutzers 115 oder ein Mikrofon zur Erfassung von akustischen Kommandos des Benutzers 115 oder ein optischer Sensor zum Einscannen von optischen Anweisungen des Benutzers 115. Das mobile Kommunikationsgerät 110 umfasst ferner einen Prozessor 111, welcher ausgebildet ist, ansprechend auf die erfasste Eingabe der persönlichen Identifikationsnummer 114 zumindest eine Anwendung der Mehrzahl von Anwendungen 121, 122, 123, 124 mittels der Anwendungs-Identifikationsnummer 131, 132, 133, 134, welche der zumindest einen Anwendung zugeordnet ist, automatisch freizuschalten, um die zumindest eine Anwendung auszuführen. Automatisch heißt in diesem Zusammenhang, dass keine weitere Interaktion des Benutzers 115 mehr erforderlich ist.

Das Teilnehmeridentitätsmodul 112 bzw. SIM Modul oder SIM Karte bildet einen integrierten Schaltkreis der die IMSI ("International Mobile Subscriber Identity" bzw. Internationale Mobile Teilnehmer Identität) und die zugehörige Schlüsselinformation sicher speichert. Die Schlüsselinformation wird dazu genutzt, Benutzer des mobilen Kommunikationsgeräts zu identifizieren und zu authentifizieren. Die in der Teilnehmeridentitätsmodul 112 gespeicherte Schlüsselinformation kann Folgendes umfassen: eine einzigartige Seriennummer (ICCID, Integrated Circuit Card ID) mit bis zu 20 Zeichen, die IMSI mit MCC (Mobile Country Code), MNC (Mobile Network Code) und MSIN (Mobile Subscriber Identification Number), sicherheitsrelevante Authentifizierungs- und Verschlüsselungsinformationen wie z.B. den Authentifizierungsschlüssel, z.B. in Form eines 128bit einzigartigen Schlüssels für jede SIM, der auch auf dem Authentifizierungsserver (AuC) bzw. dem HSS (Home Subscription Server) gespeichert sein kann, temporäre Informationen in Bezug auf das lokale Netzwerk, beispielsweise LAI (Local Area ID) wie von dem lokalen Träger übermittelt, und eine Liste von Diensten und Anwendungen, zu denen der Benutzer Zugang hat, z.B. eine betreiberspezifische Notfallnummer, die Nummer des SMS (Short Message Service) Servers, den Namen des Dienstanbieters SPN (Service Provider Name), Dienstrufnummern (SDN, Service Dialing Numbers), Parameter zum Kostenprofil, Zusatzdienste (VAS, Value Added Services). Ferner können auf dem Teilnehmeridentitätsmodul 112 bzw. SIM Modul oder SIM Karte zwei Passwörter gespeichert sein, zum einen die PIN, die hier auch als SIM-PIN bezeichnet wird, welche für die übliche Nutzung gedacht ist und zum anderen einen persönlichen Entsperrcode (PUK, Personal Unblocking Code) zum Entsperren der PIN bzw. SIM-PIN.

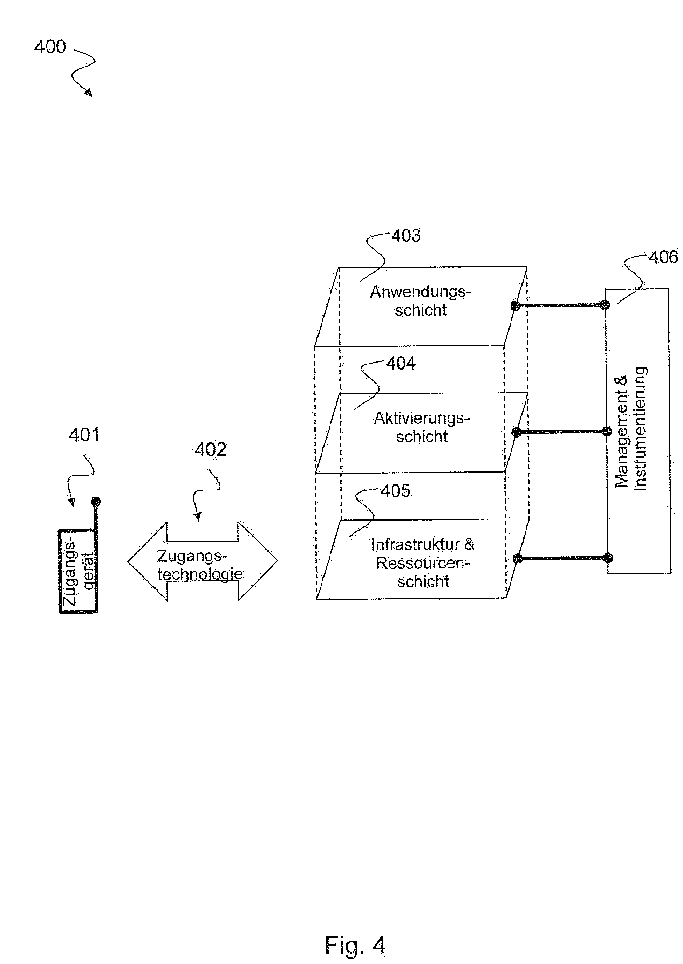

Die Anwendungen können Anwendungsprogramme, sogenannte Apps, oder Dienste auf dem mobilen Kommunikationsgerät 110 bzw. Smartphone sein. Die Anwendungen können auch mit Slices 141, 142 eines 5G Kommunikationsnetzes gekoppelt sein, um dort spezifische Funktionalitäten zu aktivieren bzw. freizuschalten, wie unten zu den Figuren 4 bis 6 näher beschrieben.

Der Prozessor 111 kann dabei ansprechend auf die erfasste Eingabe der persönlichen Identifikationsnummer 114 jede Anwendung der Mehrzahl von Anwendungen 121, 122, 123, 124 mittels der Anwendungs-Identifikationsnummer 131, 132, 133, 134 automatisch freischalten. Der Prozessor 111 kann dafür die jeweilige Anwendungs-Identifikationsnummer an die jeweilige Anwendung 121, 122, 123, 124 übermitteln, um die jeweilige Anwendung freizuschalten.

Der Prozessor 111 kann danach die Mehrzahl von Anwendungen 121, 122, 123, 124 starten und die gestarteten Anwendungen 121, 122, 123, 124 mittels der persönlichen Identifikationsnummer freischalten.

Jede Anwendung der Mehrzahl von Anwendungen 121, 122, 123, 124 kann über eine eigene sekundäre PIN verfügen, mittels welcher sie freischaltbar ist. Die persönliche Identifikationsnummer kann dafür eine Master-PIN sein, mit der alle sekundären PINs freischaltbar sind.

Die Mehrzahl von Anwendungen 121, 122, 123, 124 können beispielsweise Applikationsprogramme, Dienste, Konfigurationen, Zugriff auf Speichermedien, Zugriff auf Server, Zugriff auf Kommunikationsgeräte, Anwendungen zur Netzwerkzugangssteuerung, insbesondere USIM, CSIM, ISIM; NFC Anwendungen umfassen.

Das Teilnehmeridentitätsmodul 112 kann beispielsweise auf einem eUICC (embedded Universal Integrated Circuit Card)-Schaltkreis implementiert sein.

In einer Ausführungsform kann der Prozessor 111 ansprechend auf die erfasste Eingabe der persönlichen Identifikationsnummer 114 einen Kommunikationskanal 615 über ein Netzwerk einer fünften Generation (5G) 400, 500 oder einer weiteren Generation, wie beispielsweise unten zu den Figuren 4, 5 und 6 näher beschrieben, aufbauen.

Der Prozessor 111 kann beispielsweise ansprechend auf die erfasste Eingabe der persönlichen Identifikationsnummer 114 einen Slice 601 des Netzwerks der fünften 400, 500 oder weiteren Generation konfigurieren, wie beispielsweise unten zu den Figuren 4, 5 und 6 näher beschrieben. Der Prozessor 111 kann beispielsweise ansprechend auf die erfasste Eingabe der persönlichen Identifikationsnummer 114 eine Anwendung 403 des Netzwerks der fünften 400, 500 oder weiteren Generation freischalten, wie beispielsweise unten zu den Figuren 4, 5 und 6 näher beschrieben.

Durch die Eingabe der SIM PIN 114 können sämtliche Anwendungen und Dienste 121, 122, 123, 124 entsperrt werden.

Gemäß einer Ausführungsform triggert der Prozessor 111 den Entsperrungs-Prozess. Beim Aufruf einer Anwendung 121, 122, 123, 124 wird diese mittels des Prozessors 111 durch die Übermittlung der IDs 131, 132, 133, 134 freigeschaltet. Die Verwaltung der IDs 131, 132, 133, 134 übernimmt der Prozessor 111.

Mit der Entsperrung der SIM werden somit automatisch auch alle Dienste 121, 122, 123, 124 entsperrt, welche der SIM bzw. der eSIM 112 zugeordnet sind. Ein Dienst kann z.B. auch die Entsperrung des Geräts 110 selbst sein.

Darüber hinaus können hierdurch auch 5G-Dienste freigeschaltet werden: Ist der Zugang zu einer Slice 141, 142 durch eine ID gesichert, so kann dieser automatisch entsperrt werden. Neben der IDs können so auch die Passwörter verwaltet werden. Das hat den Vorteil, dass die Passwörter nicht im Cache eines Browsers gespeichert werden müssen, was bei der Anwendung Online-Banking beispielsweise von Vorteil sein kann.

Nach der Sperrung der SIM 112 können die Dienste und Anwendungen 121, 122, 123, 124 automatisch deaktiviert werden. Dadurch steigt auch die Sicherheit der Dienste und Anwendungen 121, 122, 123, 124 sowie der Schutz vor unbefugtem Zugriff.

Die Dienste und Anwendungen 121, 122, 123, 124 können zudem selektiv und SIMbasiert freigeschaltet werden.

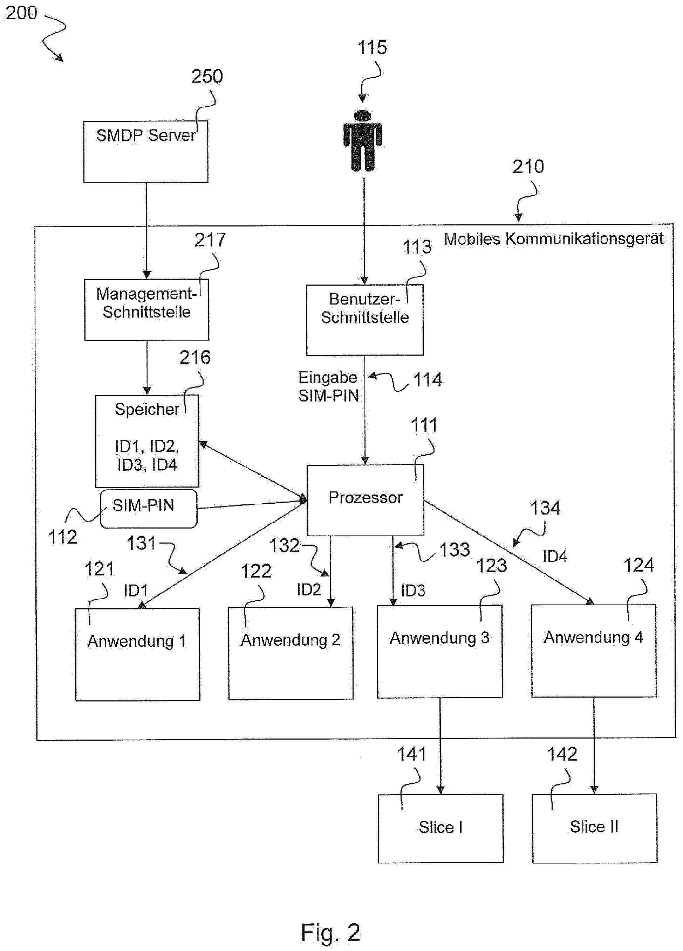

Fig. 2 zeigt eine schematische Darstellung eines Kommunikationssystems 200 mit mobilem Kommunikationsgerät 210, auf dem eine Mehrzahl von Anwendungen mittels PIN-Eingabe über eine Benutzer-Schnittstelle 113 freischaltbar sind, und einer Management-Schnittstelle 217 zum Empfangen eines Benutzerprofils gemäß einer beispielhaften zweiten Ausführungsform.

Das mobile Kommunikationsgerät 210 entspricht dem zuvor in Fig. 1 beschriebenen mobilen Kommunikationsgerät 110, wobei das mobile Kommunikationsgerät 210 ferner über eine Management-Schnittstelle 217 zum Empfang bzw. Download eines Benutzerprofils von einem SNDP Server 250 umfasst, sowie einen Speicher 216 zum Speichern der einzelnen Anwendungs-Identifikationsnummern 131, 132, 133, 134. Dabei kann der Prozessor 111 die Anwendungs-Identifikationsnummern 131, 132, 133, 134 für die Freischaltung der Anwendungen 121, 122, 123, 124 aus dem Speicher 216 auslesen.

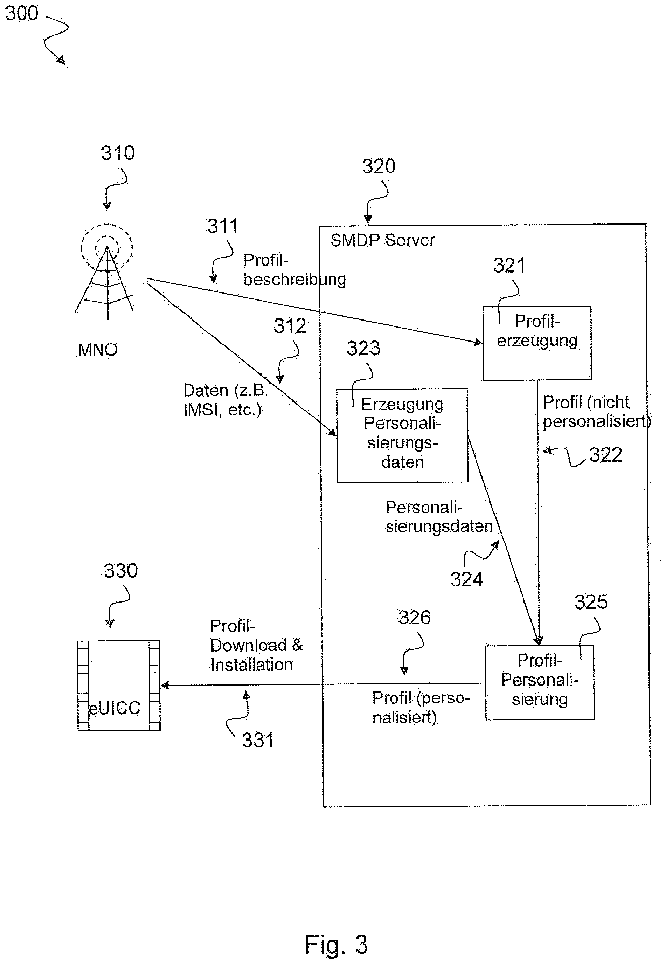

Die Management-Schnittstelle 217 dient dazu, die dem Teilnehmeridentitätsmodul 112 zugeordnete PIN von einem Netzwerkbetreiber, beispielsweise über einen SMDP (Subscription Manager Data Preparation)-Server 250 zu empfangen. Der SMDP Server 250 kann beispielsweise gemäß der Darstellung des SMDP-Servers 320 in Figur 3 realisiert sein.

In einer Ausführungsform umfasst die Management-Schnittstelle 217 eine Hardware-Verschaltung, mit der die empfangene, dem Teilnehmeridentitätsmodul zugeordnete PIN unter Umgehung des Prozessors 111 in einem verschlüsselten Bereich des mobilen Kommunikationsgeräts 210 abgelegt werden kann. Dieser verschlüsselte Bereich kann sich auf dem SIM-Modul 112 befinden und/oder kann ein Teil des Speichers 216 sein. Die oben erwähnte Hardware-Verschaltung kann beispielsweise eine Verdrahtung sein, welche die von dem SMDP Server empfangene PIN direkt in den Speicher 216 bzw. auf das SIM-Modul 112 ablegt.

Beispielsweise kann hierzu ein DMA ("Direct Memory Access") Controller verwendet werden, der einen direkten Speicherzugriff auf Speicher 216 oder SIM-Modul 112 realisiert, ohne dazu auf den Prozessor 111 zurückgreifen zu müssen. Damit kann die Sicherheit gegen Abhören der übergebenen PIN erhöht werden, denn Viren oder Trojaner brauchen das Betriebssystem des Prozessors 111, um sich im mobilen Kommunikationsgerät einnisten zu können. Bei einer Übergabe der PIN ohne Verwendung eines Betriebssystems kann kein schadhaftes Abgreifen der PIN mehr erfolgen.

In einer alternativen Ausführungsform kann die oben beschriebene Hardware-Verschaltung als eine NFC ("Near Field Communication", Nahfeldkommunikation)-Schnittstelle zwischen Management-Schnittstelle 217 und Speicher 216 bzw. SIM-Modul 112 realisiert werden. In einer solchen Implementierung ist die Strecke zwischen Management-Schnittstelle 217 und Speicher 216 über eine Nahfeld-Funkkommunikation realisiert, die ebenfalls nicht auf das Betriebssystem des Prozessors 111 zurückgreifen muss. Wie bereits oben dargestellt, benötigen Viren oder Trojaner das Betriebssystem des Prozessors 111, um sich im mobilen Kommunikationsgerät 210 einnisten zu können. Damit kann diese Strecke abhörsicher implementiert werden, denn das Funkfeld zwischen beiden Komponenten 217, 216 breitet sich nur innerhalb eines Raumes von wenigen Zentimetern aus.

In einer weiteren alternativen Ausführungsform kann die oben beschriebene Hardware-Verschaltung als eine optische Schnittstelle, z.B. durch Leuchtdioden (LEDs) oder Laserdioden und Fotosensoren, zwischen Management-Schnittstelle 217 und Speicher 216 bzw. SIM-Modul 112 realisiert werden. In einer solchen Implementierung ist die Strecke zwischen Management-Schnittstelle 217 und Speicher 216 über eine optische Kommunikation realisiert, die ebenfalls nicht auf das Betriebssystem des Prozessors 111 zurückgreifen muss. Wie bereits oben dargestellt, benötigen Viren oder Trojaner das Betriebssystem des Prozessors 111, um sich im mobilen Kommunikationsgerät 210 einnisten zu können. Damit kann diese Strecke abhörsicher implementiert werden, denn das optische Feld zwischen beiden Komponenten 217, 216 breitet sich nur zwischen den beiden Komponenten, d.h. nur im Inneren des mobilen Kommunikationsgeräts 210, aus.

Die Mehrzahl von Anwendungen 121, 122, 123, 124 können beispielsweise Applikationsprogramme, Dienste, Konfigurationen, Zugriff auf Speichermedien, Zugriff auf Server, Zugriff auf Kommunikationsgeräte, Anwendungen zur Netzwerkzugangssteuerung, insbesondere USIM, CSIM, ISIM; NFC Anwendungen umfassen.

Das Teilnehmeridentitätsmodul 112 kann beispielsweise auf einem eUICC (embedded Universal Integrated Circuit Card)-Schaltkreis implementiert sein.

In einer Ausführungsform kann der Prozessor 111 ansprechend auf die erfasste Eingabe der persönlichen Identifikationsnummer 114 einen Kommunikationskanal 615 über ein Netzwerk einer fünften Generation (5G) 400, 500 oder einer weiteren Generation, wie bereits oben zu Figur 1 beschrieben, aufbauen.

Fig. 3 zeigt eine schematische Darstellung eines Kommunikationssystems 300 mit eUICC 330 und SMDP Server 320 zum Bereitstellen eines personalisierten Profils 326 gemäß einer beispielhaften Ausführungsform.

Der SMDP ("Subscription Manager Data Preparation") Server 320, d.h. Einschreibeverwaltungs- und Datenvorbereitungs-Server 320 ist ein Server, der dem SIM-Modul bzw. der eUICC 330 ein personalisiertes Benutzerprofil 326 zur Verfügung stellt, das dieser über eine Schnittstelle 331 herunterladen und installieren kann. Dazu empfängt der SMDP Server 320 eine Profilbeschreibung 311 und persönliche Daten 312, wie beispielsweise eine IMSI (International Mobile Subscriber ID) von dem mobilen Netzwerkbetreiber (MNO) 310, bei dem der entsprechende Benutzer eingeschrieben bzw. angemeldet ist.

Der SMDP Server 320 umfasst ein Profilerzeugungsmodul 321, mit dem aus der Profilbeschreibung 311 ein (nicht personalisiertes) Profil des Benutzers generiert werden kann. Der SMDP Server 320 umfasst ferner ein Modul 323 zum Erzeugen von Personalisierungsdaten, mit dem aus den persönlichen Daten 312 Personalisierungsdaten 324 erzeugt werden können, beispielsweise Netzwerkzugangsschlüssel, Profilinstallationsschlüssel, Anmeldungs- und Zugangsdaten oder andere Daten. Der SMDP Server 320 umfasst ein Modul 325 zum Erzeugen eines personalisierten Profils 326 aus dem nicht personalisierten Profil 322 und den Personalisierungsdaten 324. Das personalisierte Profil 326 kann beispielsweise mit dem Profilinstallationsschlüssel des Ziel-eUICC 330 verschlüsselt werden. Das personalisierte Profil 326 kann dann der eUICC 330 zum Download und zur Installation in gesicherter Weise bereitgestellt werden, beispielsweise über einen SM-SR Prozess, d.h. "Subscription Manager Secure Routing" bzw. Einschreibemanagement und gesichertes Routing.

Der SMDP Server 320 kann hierbei die Authentifizierung und Autorisierung der eUICC Entität 330 verwalten. Dabei stellt der SMDP Server 320 zusammen mit dem SM-SR Prozess sicher, dass elektronische Daten, die an die eUICC 330 übertragen werden, entsprechend gesichert sind. Zur Gewährleistung der Sicherheit kann ein Zugriff des Benutzers auf sensible Daten, wie das personalisierte Profil 326 hierbei ausgeschlossen werden oder beschränkt werden auf ein absolut notwendiges Minimum. Der SMDP Server 320 kann z.B. jeden Zugriff auf sensible Daten mit einem Eintrag dokumentieren, der Datum, Uhrzeit, Aktivität und Person, die den Zugriff veranlasst hat, umfasst. Sensitive Daten, wie z.B. das personalisierte Profil 326 können dazu mit kryptografischen Schlüsseln unter Nutzung kryptografischer Algorithmen verschlüsselt werden, wobei jeder kryptografische Schlüsselverwaltungsprozess entsprechend dokumentiert werden kann. Der SMDP Server 320 kann ferner über eine umfassende Software bzw. Sicherheits-Patches zur Detektion und Abwehr der jüngst bekannten Virus und Schadsoftware verfügen.

Auf Anforderung des MNO 310 kann der SMDP Server 320 auch die Aktivierung bzw. Freischaltung eines Profils sowie das Löschen eines Profils auf dem eUICC 330 initiieren.

Ein Profil kann hierbei eine Kombination einer Datenstruktur mit Daten und Anwendungen umfassen, welche auf einer eUICC bereitgestellt oder verfügbar sein soll und den Zugriff auf eine spezifische mobile Netzwerkressource erlaubt, wenn es aktiviert ist.

Die Profilbeschreibung 311 kann sich aus Profil-Metadaten zusammensetzen, d.h. Informationen über ein Profil, wie z.B. MSISDN (Mobile Subscriber ISDN) oder Daten für den SM-SR Prozess zum Managen des eUICC 330.

Der SMDP Server kann gemäß einem SAS ("Security Accreditation Scheme" bzw. Sicherheitsakkreditierungsschema) Standard realisiert sein. Der SMDP Server kann beispielsweise gemäß dem GSMA SAS Standard realisiert sein, z.B. in der Version 1.0 vom 13. Oktober 2014.

Fig. 4 zeigt eine schematische Darstellung einer 5G Systemarchitektur 400.

Die 5G Systemarchitektur 400 umfasst einen Bereich mit 5G Kommunikationsendgeräten 401, die über verschiedene Zugangstechnologien 402 mit einer mehrschichtigen Kommunikationsstruktur verbunden sind, welche eine Infrastruktur- & Ressourcenschicht 405, eine Aktivierungsschicht 404 und eine Anwendungsschicht 403 umfasst, die über eine Management- & Instrumentierungsebene 406 verwaltet werden.

Die Infrastruktur- & Ressourcenschicht 405 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 404, 403 und der Management- & Instrumentierungsebene 406 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 404 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 406 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 403 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 406 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Die Management- & Instrumentierungsebene 406 ist der Kontaktpunkt, um die geforderten Anwendungsfälle (Use Cases, auch Geschäftsmodelle) in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 405 ab. Die Management- & Instrumentierungsebene 406 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APis ihre eigenen Netzwerk Slices zu erzeugen und zu verwalten. Aufgrund der vielzähligen Aufgaben der Management- & Instrumentierungsebene 406 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren.

Mit dem oben zu den Figuren 1 und 2 beschriebenen mobilen Kommunikationsgerät 110, 210, das als Zugangsgerät 401 genutzt wird, kann ein Kommunikationskanal über das Netzwerk 400 aufgebaut werden. Dazu kann der Prozessor 111 ansprechend auf die erfasste Eingabe der persönlichen Identifikationsnummer 114 den Kommunikationskanal über das Netzwerk 400 aufbauen. Der Prozessor 111 kann beispielsweise ansprechend auf die erfasste Eingabe der persönlichen Identifikationsnummer 114 einen Slice der Anwendungsschicht 403 konfigurieren lassen, indem er eine Signalisierungsnachricht, welche die entsprechende Anforderung und Konfigurationsparameter dazu umfasst, an die Management & Instrumentierungsschicht 406 übermittelt. Der Prozessor 111 kann beispielsweise ansprechend auf die erfasste Eingabe der persönlichen Identifikationsnummer 114 über die besagte Signalisierungsnachricht an die Management & Instrumentierungsschicht 406 eine Anwendung aus der Anwendungsschicht 403 des 5G Netzwerks 400 freischalten lassen.

Das 5G Netzwerk 400 steigert die Leistungsfähigkeit der Kommunikation und realisiert insbesondere einen höheren Datendurchsatz, eine geringere Verzögerung, eine besonders hohe Zuverlässigkeit, eine weitaus höhere Verbindungsdichte und einen größeren Mobilitätsbereich, erhöht zum anderen aber auch die Flexibilität im Betrieb und stellt maßgeschneiderte Funktionen mit dem geringstmöglichen Einsatz von Mitteln bereit. Diese erhöhte Leistungsfähigkeit geht einher mit der Fähigkeit zur Steuerung stark heterogener Umgebungen und der Fähigkeit zur Sicherung von Vertrauen, Identität und Privatsphäre der Nutzer.

Die hier vorgestellten Geräte, Systeme und Verfahren sind dazu vorgesehen, die Leistungsfähigkeit der Kommunikation in Kommunikationsnetzen zu verbessern, insbesondere in 5G Kommunikationsnetzen mit mehreren Netzwerk Slices (Netzwerkscheiben), wie im Folgenden beschrieben.

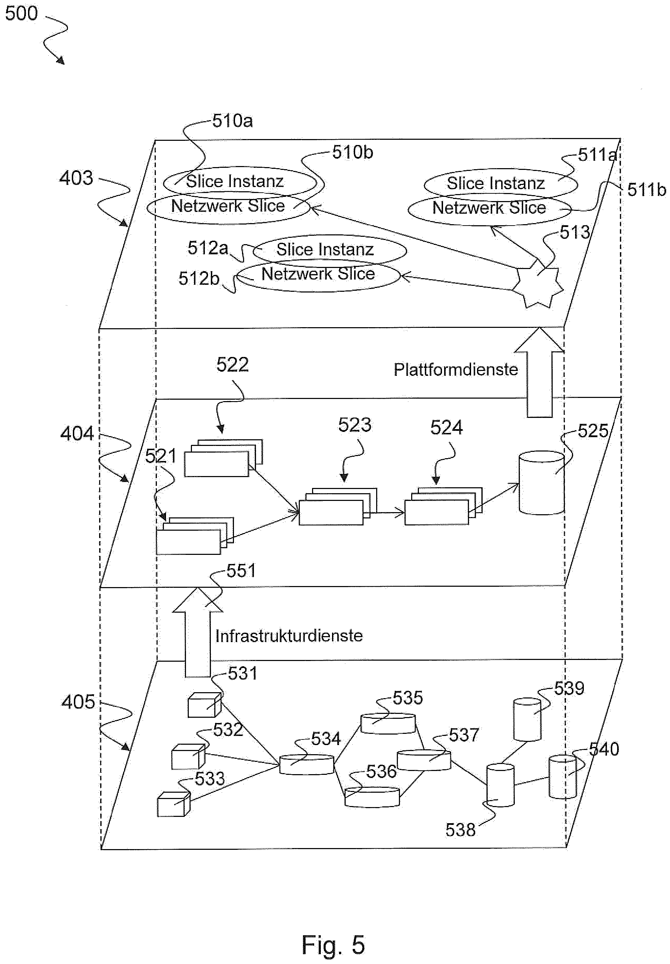

Fig. 5 zeigt eine schematische Darstellung eines 5G-Kommunikationsnetzwerks mit mehreren Slices (Netzwerkscheiben) 500.

Das 5G-Kommunikationsnetzwerk 500 umfasst eine Infrastruktur- & Ressourcenschicht 405, eine Aktivierungsschicht 404 und eine Anwendungsschicht 403 wie oben zu Figur 4 beschrieben.

Die Infrastruktur- & Ressourcenschicht 405 umfasst alle physikalischen Aktiva, die einem Netzwerkbetreiber zugeordnet sind, d.h. Standorte, Kabel, Netzwerkknoten etc. Diese Schicht 405 bildet die Grundlage für alle Netzwerk Slices. Sie ist so generisch wie möglich aufgebaut ohne zu viele spezialisierte physikalische Einheiten. Die Infrastruktur- & Ressourcenschicht 405 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 405 basieren auf Hardware und Software bzw. Firmware, die für die jeweilige Operation benötigt wird und dabei als Infrastruktur- & Ressourcenschicht 405 den darüber liegenden Schichten als Ressourcenobjekte zu Verfügung gestellt wird. Beispielsweise umfassen Objekte der Infrastruktur- & Ressourcenschicht 405 virtuelle Maschinen, virtuelle Links bzw. Verbindungen und virtuelle Netzwerke, z.B. virtuelle Zugangsknoten 531, 532, 533, virtuelle Netzwerkknoten 534, 535, 536, 537 und virtuelle Computerknoten 538, 539, 540. Wie der Begriff "virtuell" bereits sagt, stellt die Infrastruktur- & Ressourcenschicht 405 die Objekte in der Form einer "Infrastruktur als Dienst" 551, d.h. in einer abstrahierenden, virtualisierten Form der nächsthöheren Schicht 404 zur Verfügung.

Die Aktivierungsschicht 404 ist oberhalb der Infrastruktur- & Ressourcenschicht 405 angeordnet. Sie nutzt die Objekte der Infrastruktur- & Ressourcenschicht 405 und fügt diesen zusätzliche Funktionalität in Form von (z.B. nicht-physikalischen) Software Objekten /VNFs hinzu um das Erzeugen von jeder Art von Netzwerk Slices zu ermöglichen und so eine Plattform als Dienst der nächsthöheren Schicht 403 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 404 verschiedene abstrahierte Objekte 521 mit anderen abstrahierten Objekten und mit virtuellen Netzwerkfunktionen 522 kombiniert werden, um kombinierte Objekte 523 zu bilden, die in aggregierte Objekten 524 überführt werden können und in einer Objektbibliothek 525 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 404, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 404 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 404 kann als eine Art von Netzwerk-Betriebssystem betrachtet werden komplementiert durch eine Netzwerkerzeugungsumgebung. Eine wesentliche Aufgabe der Aktivierungsschicht 404 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 403 umfasst alle erzeugten Netzwerk Slices 510b, 511b, 512b und bietet diese als "Netzwerk als Service" verschiedenen Netzwerknutzern, z.B. verschiedenen Kunden an. Das Konzept erlaubt die Wiederbenutzung von definierten Netzwerk Slices 510b, 511b, 512b für verschiedene Anwender, z.B. Kunden, beispielsweise als eine neue Netzwerk Slice Instanz 510a, 511a, 512a. D.h. ein Netzwerk Slice 510b, 511b, 512b, welcher beispielsweise einer Automotive Anwendung zugeordnet ist, kann auch für Anwendungen verschiedener anderer industrieller Anwendungen genutzt werden. Die Slices Instanzen 510a, 511a, 512a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Mit dem oben zu den Figuren 1 und 2 beschriebenen mobilen Kommunikationsgerät 110, 210 kann ein Kommunikationskanal über das Netzwerk 500 aufgebaut werden. Dazu kann der Prozessor 111 ansprechend auf die erfasste Eingabe der persönlichen Identifikationsnummer 114 den Kommunikationskanal über das Netzwerk 500 aufbauen. Der Prozessor 111 kann beispielsweise ansprechend auf die erfasste Eingabe der persönlichen Identifikationsnummer 114 einen Netzwerk-Slice 510b, 511b, 512b oder eine entsprechende Slice Instanz 510a, 511a, 512a der Anwendungsschicht 403 konfigurieren lassen, indem er eine Signalisierungsnachricht, welche die entsprechende Anforderung und Konfigurationsparameter dazu umfasst, an die in Figur 4 beschriebene Management & Instrumentierungsschicht 406 übermittelt. Der Prozessor 111 kann beispielsweise ansprechend auf die erfasste Eingabe der persönlichen Identifikationsnummer 114 über die besagte Signalisierungsnachricht an die Management & Instrumentierungsschicht 406 eine Anwendung aus der Anwendungsschicht 403 des 5G Netzwerks 400 freischalten lassen, z.B. einen Netzwerk-Slice 510b, 511b, 512b oder eine entsprechende Slice Instanz 510a, 511a, 512a der Anwendungsschicht 403.

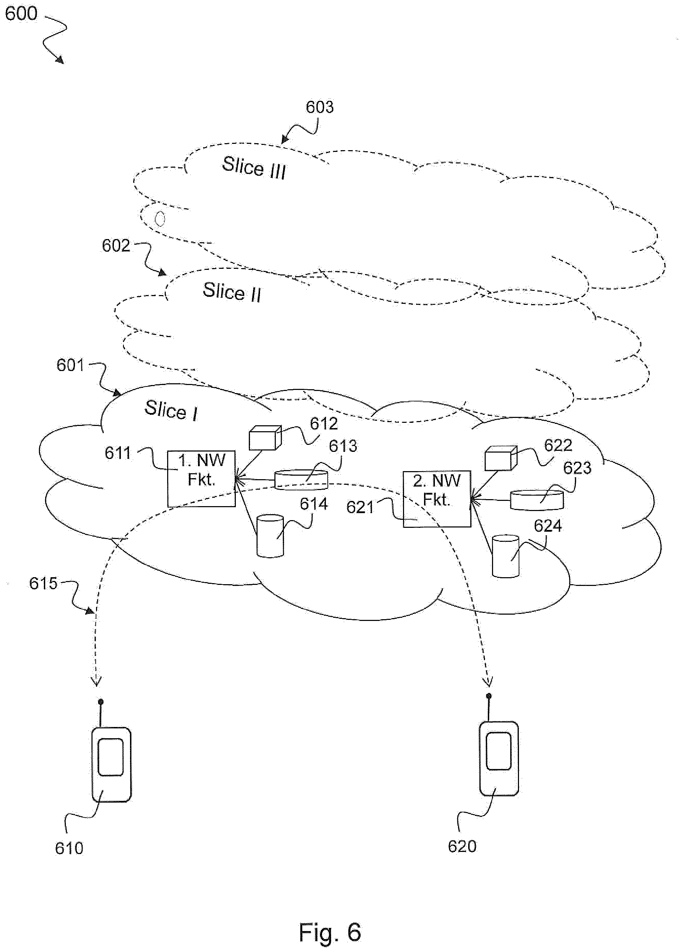

Fig. 6 zeigt eine schematische Darstellung eines 5G-Kommunikationsnetzwerkes 600 mit Kommunikationskanal 615 zur Kommunikation zwischen zwei mobilen Kommunikationsgeräten gemäß einer beispielhaften Ausführungsform.

Das Kommunikationsgerät 610 kann einen Kommunikationskanal 615 über das Netzwerk 600 aufbauen, beispielsweise zu einem zweiten Kommunikationsgerät 620. Das Kommunikationsgerät 610 kann dem oben zu Figur 1 und 2 beschriebenen mobilen Kommunikationsgerät 110, 210 entsprechen. Zur Initiierung des Kommunikationskanals 615 kann der Prozessor 111 ansprechend auf die erfasste Eingabe der persönlichen Identifikationsnummer 114 den Kommunikationskanal 615 über das Netzwerk 600 aufbauen, beispielsweise über ein erstes Subnetz 601 bzw. Slice I des Kommunikationsnetzwerks 600. Der Prozessor 111 kann beispielsweise ansprechend auf die erfasste Eingabe der persönlichen Identifikationsnummer 114 den Netzwerk-Slice 601 konfigurieren lassen, indem er eine Signalisierungsnachricht, welche die entsprechende Anforderung und Konfigurationsparameter dazu umfasst, an die in Figur 4 beschriebene Management & Instrumentierungsschicht 406 übermittelt. Diese kann beispielsweise eine erste Netzwerkfunktion 611 und eine zweite Netzwerkfunktion 621 im Slice 601 konfigurieren, welche dann die notwendigen Ressourcen 612, 613, 614, 622, 623, 624 zum Aufbau des Kommunikationskanals 615 allokiert. Der Prozessor 111 kann beispielsweise ansprechend auf die erfasste Eingabe der persönlichen Identifikationsnummer 114 über die besagte Signalisierungsnachricht an die Management & Instrumentierungsschicht 406 eine Anwendung aus der Anwendungsschicht 403 des 5G Netzwerks 400 freischalten lassen, z.B. den Netzwerk-Slice 601 oder die Netzwerkfunktionen 611, 621 zum Allokieren der erforderlichen Netzwerkressourcen 612, 613, 614, 622, 623, 624 zum Aufbau des Kommunikationskanals 615.

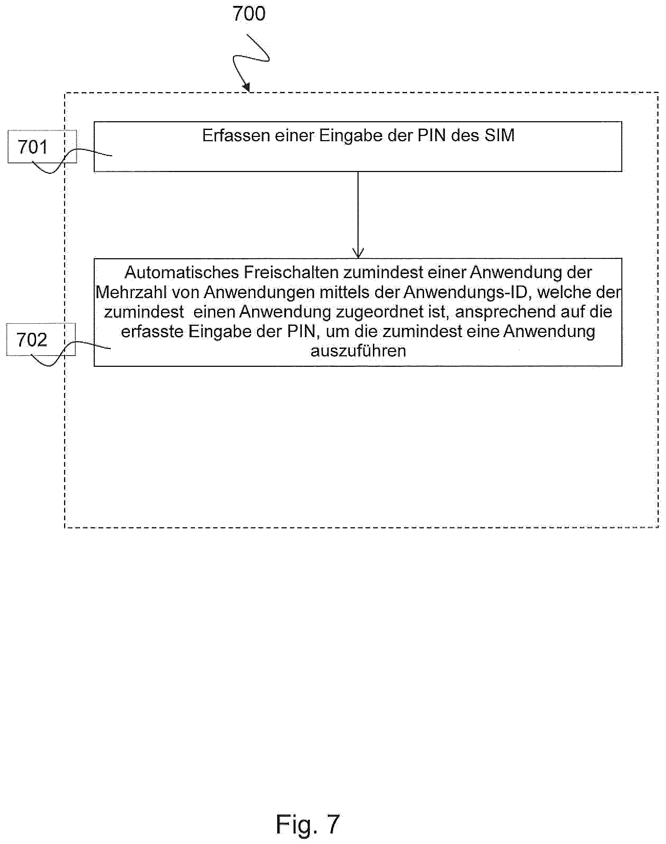

Fig. 7 zeigt eine schematische Darstellung eines Verfahrens 700 zum Freischalten zumindest einer Anwendung auf einem mobilen Kommunikationsgerät, auf welchem eine Mehrzahl von Anwendungen ausführbar ist, gemäß einer beispielhaften Ausführungsform.

Dabei ist jede Anwendung mittels einer Anwendungs-Identifikationsnummer freischaltbar und das Kommunikationsgerät umfasst ein Teilnehmeridentitätsmodul (SIM), welchem eine persönliche Identifikationsnummer (PIN) zugeordnet ist, wie oben zu den Figuren 1 und 2 beschrieben.

Das Verfahren umfasst einen ersten Schritt 701: Erfassen einer Eingabe der persönlichen Identifikationsnummer des Teilnehmeridentitätsmoduls, beispielsweise mittels einer Benutzerschnittstelle 113 wie oben zu den Figuren 1 und 2 beschrieben.

Das Verfahren 700 umfasst einen zweiten Schritt 702: automatisches Freischalten zumindest einer Anwendung der Mehrzahl von Anwendungen mittels der Anwendungs-Identifikationsnummer, welche der zumindest einen Anwendung zugeordnet ist, ansprechend auf die erfasste Eingabe der persönlichen Identifikationsnummer, um die zumindest eine Anwendung auszuführen, beispielsweise mittels eines Prozessors 111 wie oben zu den Figuren 1 und 2 beschrieben.

Das Verfahren 700 kann beispielsweise in einem Kommunikationsnetzwerk oder Kommunikationssystem 100, 200, 300, 400, 500, 600, wie in den Figuren 1 bis 6 beschrieben, eingesetzt werden, insbesondere auf einem mobilen Kommunikationsgerät 110, 210, 401, 610, 620 wie zu den Figuren 1, 2, 4 und 6 beschrieben oder auf einer eUICC 330 wie oben zu Figur 3 beschrieben. Das Verfahren kann ferner weitere Schritte umfassen, mit denen die oben zu den Figuren 1 bis 6 beschriebenen Funktionalitäten auf den genannten Geräten realisiert werden können.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 7 beschriebene Verfahren 700 oder die zu den Figuren 1 bis 6 beschriebenen Vorgänge ausgeführt werden können, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 700 auszuführen oder die Netzkomponenten der in den Figuren 1 bis 6 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1 bis 6 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: Kommunikationssystem
- 110:: Mobiles Kommunikationsgerät gemäß erster Ausführungsform
- 111:: Prozessor
- 112:: Teilnehmeridentitätsmodul mit persönlicher Identifikationsnummer SIM-PIN
- 113:: Benutzer-Schnittstelle
- 114:: Eingabe der SIM-PIN
- 115:: Anwender bzw. Benutzer
- 121:: erste Anwendung
- 122:: zweite Anwendung
- 123:: dritte Anwendung
- 124:: vierte Anwendung
- 131:: erste Anwendungs-ID
- 132:: zweite Anwendungs-ID
- 133:: dritte Anwendungs-ID
- 134:: vierte Anwendungs-ID
- 141:: erstes Slice bzw. erstes Subnetzwerk
- 142:: zweites Slice bzw. zweites Subnetzwerk

- 200:: Kommunikationssystem
- 210:: Mobiles Kommunikationsgerät gemäß zweiter Ausführungsform
- 216:: Speicher
- 217:: Management-Schnittstelle
- 250:: SMDP Server

- 300:: Kommunikationssystems
- 310:: MNO bzw. Mobilfunknetzwerk-Betreiber
- 311:: Profilbeschreibung
- 312:: persönliche Daten, z.B. IMSI etc.
- 320:: SMDP Server 320
- 321:: Profilerzeugung
- 322:: Profil, nicht personalisiert
- 323:: Erzeugung Personalisierungsdaten
- 324:: Personalisierungsdaten
- 325:: Profil-Personalisierung
- 326:: personalisiertes Profil
- 330:: eUICC
- 331:: Profil Download und Installation

- 400:: 5G Systemarchitektur
- 401:: Zugangsgerät, Kommunikationsendgerät, UE
- 402:: Zugangstechnologie
- 403:: Anwendungsschicht
- 404:: Aktivierungsschicht
- 405:: Infrastruktur & Ressourcenschicht
- 406:: Management & Instrumentierungsschicht

- 500:: 5G Kommunikationsnetzwerk mit mehreren Slices
- 510a:: erste Slice Instanz
- 510b:: erste Netzwerk Slice
- 511a:: zweite Slice Instanz
- 511b:: zweite Netzwerk Slice
- 512a:: dritte Slice Instanz
- 512b:: dritte Netzwerk Slice
- 513:: Slice Komposition
- 521:: abstrahierte Objekte
- 522:: virtuelle Netzwerkfunktionen
- 523:: kombinierte Objekte
- 524:: aggregierte Objekte
- 525:: Objektbibliothek
- 531:: Zugangsknoten
- 532:: Zugangsknoten
- 533:: Zugangsknoten
- 534:: virtueller Netzwerkknoten
- 535:: virtueller Netzwerkknoten
- 536:: virtueller Netzwerkknoten
- 537:: virtueller Netzwerkknoten
- 538:: Computerknoten
- 539:: Computerknoten
- 540:: Computerknoten
- 551:: Infrastrukturdienste

- 600:: Kommunikationsnetzwerk bzw. Kommunikationssystem
- 601:: erstes Subnetzwerk bzw. Slice I oder einfach Subnetzwerk
- 602:: zweites Subnetzwerk bzw. Slice II
- 603:: drittes Subnetzwerk bzw. Slice III
- 610:: erstes mobiles Kommunikationsgerät,
- 611:: erste Kommunikationsentität mit erster Netzwerkfunktion
- 612, 613, 614:: Netzwerkkomponenten, die der ersten Kommunikationsentität mittels der ersten Netzwerkfunktion zugewiesen werden
- 620:: zweites mobiles Kommunikationsgerät,
- 621:: zweite Kommunikationsentität mit zweiter Netzwerkfunktion
- 622, 623, 624:: Netzwerkkomponenten, die der zweiten Kommunikationsentität mittels der zweiten Netzwerkfunktion zugewiesen werden

- 700:: Verfahren zum Freischalten einer Anwendung auf einem mobilen Kommunikationsgerät
- 701:: erster Schritt: Erfassen einer Eingabe der PIN
- 702:: zweiter Schritt: Automatisches Freischalten zumindest einer Anwendung

## Patentansprüche

1. Mobiles Kommunikationsgerät (110), auf welchem eine Mehrzahl von Anwendungen (121, 122, 123, 124) ausführbar ist, wobei jede Anwendung mittels einer Anwendungs-Identifikationsnummer (131, 132, 133, 134) freischaltbar ist, wobei das Kommunikationsgerät ein Teilnehmeridentitätsmodul, SIM (112) aufweist, welchem eine persönliche Identifikationsnummer, SIM-PIN zugeordnet ist, mit:
einer Benutzerschnittstelle (113) zum Erfassen einer Eingabe der persönlichen Identifikationsnummer (114) des Teilnehmeridentitätsmoduls (112); und
einem Prozessor (111), welcher ausgebildet ist, ansprechend auf die erfasste Eingabe der persönlichen Identifikationsnummer (114) zumindest eine Anwendung der Mehrzahl von Anwendungen (121, 122, 123, 124) mittels der Anwendungs-Identifikationsnummer (131, 132, 133, 134), welche der zumindest einen Anwendung zugeordnet ist, automatisch freizuschalten, um die zumindest eine Anwendung auszuführen,
wobei der Prozessor (111) ausgebildet ist, ansprechend auf die erfasste Eingabe der persönlichen Identifikationsnummer (114) einen Kommunikationskanal (615) über ein Netzwerk einer fünften Generation, 5G (400, 500) aufzubauen und eine Anwendung (403) des 5G-Netzwerks (400, 500) freizuschalten oder freischalten zu lassen,
wobei der Prozessor (111) ferner ausgebildet ist, ansprechend auf die erfasste Eingabe der persönlichen Identifikationsnummer (114) einen Slice (601) des Netzwerks der fünften (400, 500) Generation zu konfigurieren oder konfigurieren zu lassen.

2. Mobiles Kommunikationsgerät (110) nach Anspruch 1,
wobei der Prozessor (111) ausgebildet ist, ansprechend auf die erfasste Eingabe der persönlichen Identifikationsnummer (114) jede Anwendung der Mehrzahl von Anwendungen (121, 122, 123, 124) mittels der Anwendungs-Identifikationsnummer (131, 132, 133, 134), welche der jeweiligen Anwendung zugeordnet ist, automatisch freizuschalten.

3. Mobiles Kommunikationsgerät (110) nach Anspruch 1 oder 2,
wobei der Prozessor (111) ausgebildet ist, die jeweilige Anwendungs-Identifikationsnummer an die jeweilige Anwendung (121, 122, 123, 124) zu übermitteln, um die jeweilige Anwendung freizuschalten.

4. Mobiles Kommunikationsgerät (110) nach einem der vorstehenden Ansprüche,
wobei der Prozessor (111) ausgebildet ist, nach dem Freischalten der zumindest einen Anwendung mittels der Anwendungs-Identifikationsnummer die verbleibenden Anwendungen (121, 122, 123, 124) zu starten und mittels der persönlichen Identifikationsnummer freizuschalten.

5. Mobiles Kommunikationsgerät (210) nach einem der vorstehenden Ansprüche, mit:
einem Speicher (216), in welchem die Anwendungs-Identifikationsnummern (131, 132, 133, 134) der Mehrzahl von Anwendungen (121, 122, 123, 124) gespeichert sind, und
wobei der Prozessor (111) ausgebildet ist, die Anwendungs-Identifikationsnummern (131, 132, 133, 134) für die Freischaltung der Anwendungen (121, 122, 123, 124) aus dem Speicher (216) auszulesen.

6. Mobiles Kommunikationsgerät (210) nach einem der vorstehenden Ansprüche,
wobei jede Anwendung der Mehrzahl von Anwendungen (121, 122, 123, 124) über eine eigene sekundäre PIN verfügt, mittels welcher sie freischaltbar ist, und
wobei die persönliche Identifikationsnummer eine Master-PIN ist, mit der alle sekundären PINs freischaltbar sind.

7. Mobiles Kommunikationsgerät (210) nach einem der vorstehenden Ansprüche,
wobei der Prozessor (111) ausgebildet ist, ansprechend auf eine Übereinstimmung der erfassten PIN (114) mit der dem Teilnehmeridentitätsmodul (112) zugeordneten PIN die zumindest eine Anwendung (121, 122, 123, 124) freizuschalten.

8. Mobiles Kommunikationsgerät (210) nach Anspruch 7, mit:
einer Management-Schnittstelle (217), die ausgebildet ist, die dem Teilnehmeridentitätsmodul (112) zugeordnete PIN von einem Netzwerkbetreiber, insbesondere über einen SMDP, Subscription Manager Data Preparation-Server (250) zu empfangen.

9. Mobiles Kommunikationsgerät (210) nach Anspruch 8,
wobei die Management-Schnittstelle (217) eine Hardware-Verschaltung umfasst, die ausgebildet ist, die empfangene, dem Teilnehmeridentitätsmodul zugeordnete PIN unter Umgehung des Prozessors (111) in einem verschlüsselten Bereich des mobilen Kommunikationsgeräts (210) abzulegen.

10. Mobiles Kommunikationsgerät (210) nach einem der vorstehenden Ansprüche,
wobei die Mehrzahl von Anwendungen (121, 122, 123, 124) folgendes umfassen:
Applikationsprogramme, Dienste, Konfigurationen, Zugriff auf Speichermedien, Zugriff auf Server, Zugriff auf Kommunikationsgeräte, Anwendungen zur Netzwerkzugangssteuerung, insbesondere USIM, CSIM, ISIM; NFC Anwendungen.

11. Mobiles Kommunikationsgerät (210) nach einem der vorstehenden Ansprüche, mit:
einem eUICC, embedded Universal Integrated Circuit Card-Schaltkreis, auf dem das Teilnehmeridentitätsmodul, SIM (112) implementiert ist.

12. Verfahren (700) zum Freischalten zumindest einer Anwendung auf einem mobilen Kommunikationsgerät, auf welchem eine Mehrzahl von Anwendungen ausführbar ist, wobei jede Anwendung mittels einer Anwendungs-Identifikationsnummer freischaltbar ist, wobei das Kommunikationsgerät ein Teilnehmeridentitätsmodul, SIM aufweist, welchem eine persönliche Identifikationsnummer, PIN zugeordnet ist, mit:
Erfassen (701) einer Eingabe der persönlichen Identifikationsnummer des Teilnehmeridentitätsmoduls;
automatisches Freischalten (702) zumindest einer Anwendung der Mehrzahl von Anwendungen mittels der Anwendungs-Identifikationsnummer, welche der zumindest einen Anwendung zugeordnet ist, ansprechend auf die erfasste Eingabe der persönlichen Identifikationsnummer, um die zumindest eine Anwendung auszuführen; und
Aufbauen eines Kommunikationskanals über ein Netzwerk einer fünften Generation, 5G (400, 500) und Freischalten oder Freischalten lassen einer Anwendung (403) des 5G-Netzwerks (400, 500) ansprechend auf die erfasste Eingabe der persönlichen Identifikationsnummer; und
Konfigurieren oder Konfigurieren lassen eines Slice (601) des Netzwerks der fünften (400, 500) Generation, ansprechend auf die erfasste Eingabe der persönlichen Identifikationsnummer (114).

## Claims

1. Mobile communication device (110) on which a plurality of applications (121, 122, 123, 124) can be run, wherein each application can be activated by means of an application identification number (131, 132, 133, 134), wherein the communication device comprises a subscriber identity module (SIM) (112) to which a personal identification number (SIM PIN) is assigned, the device comprising:
a user interface (113) for detecting an input of the personal identification number (114) of the subscriber identity module (112); and
a processor (111), which is designed, in response to the detected input of the personal identification number (114), to automatically activate at least one application of the plurality of applications (121, 122, 123, 124) by means of the application identification number (131, 132, 133, 134), which is assigned to the at least one application, in order to run the at least one application,
wherein the processor (111) is designed to form a communication channel (615) over a fifth generation (5G) network (400, 500) and to activate an application (403) of the 5G network (400, 500), or to allow said application to be activated, in response to the detected input of the personal identification number (114),
wherein the processor (111) is further designed to configure a slice (601) of the fifth-generation network (400, 500), or allow said slice to be configured, in response to the detected input of the personal identification number (114).

2. Mobile communication device (110) according to claim 1,
wherein the processor (111) is designed to automatically activate each application of the plurality of applications (121, 122, 123, 124) by means of the application identification number (131, 132, 133, 134) that is assigned to the relevant application, in response to the detected input of the personal identification number (114).

3. Mobile communication device (110) according to either claim 1 or claim 2,
wherein the processor (111) is designed to transmit the relevant application identification number to the relevant application (121, 122, 123, 124), in order to activate the relevant application.

4. Mobile communication device (110) according to any of the preceding claims,
wherein the processor (111) is designed to start the remaining applications (121, 122, 123, 124) and activate said applications by means of the personal identification number after the at least one application has been activated by means of the application identification number.

5. Mobile communication device (210) according to any of the preceding claims, comprising:
a memory (216), in which the application identification numbers (131, 132, 133, 134) of the plurality of applications (121, 122, 123, 124) are stored, and
wherein the processor (111) is designed to read out the application identification numbers (131, 132, 133, 134) from the memory (216) in order to activate the applications (121, 122, 123, 124).

6. Mobile communication device (210) according to any of the preceding claims,
wherein each application of the plurality of applications (121, 122, 123, 124) has an individual secondary PIN, by means of which said application can be activated, and
wherein the personal identification number is a master PIN, by means of which all the secondary PINs can be activated.

7. Mobile communication device (210) according to any of the preceding claims,
wherein the processor (111) is designed to activate the at least one application (121, 122, 123, 124) in response to the detected PIN (114) matching the PIN assigned to the subscriber identity module (112).

8. Mobile communication device (210) according to claim 7, comprising:
a management interface (217), which is designed to receive the PIN assigned to the subscriber identity module (112) from a network operator, in particular via an SMDP (Subscription Manager Data Preparation) server (250).

9. Mobile communication device (210) according to claim 8,
wherein the management interface (217) comprises hardware circuitry, which is designed to store the received PIN assigned to the subscriber identity module in an encrypted region of the mobile communication device (210) by bypassing the processor (111).

10. Mobile communication device (210) according to any of the preceding claims,
wherein the plurality of applications (121, 122, 123, 124) comprise the following:
application programs, services, configurations, access to storage media, access to servers, access to communication devices, applications for controlling network access, in particular USIM, CSIM and/or ISIM, and/or NFC applications.

11. Mobile communication device (210) according to any of the preceding claims, comprising:
an eUICC (embedded Universal Integrated Circuit Card), on which the subscriber identity module (SIM) (112) is implemented.

12. Method (700) for activating at least one application on a mobile communication device, on which device a plurality of applications can be run, wherein each application can be activated by means of an application identification number, wherein the communication device comprises a subscriber identity module (SIM) to which a personal identification number (PIN) is assigned, the method comprising:
detecting (701) input of the personal identification number of the subscriber identity module;
automatically activating (702), in response to the detected input of the personal identification number, at least one application of the plurality of applications by means of the application identity number that is assigned to the at least one application, in order to run the at least one application; and
forming a communication channel over a fifth generation (5G) network (400, 500) and activating an application (403) of the 5G network (400, 500), or allowing said application to be activated, in response to the detected input of the personal identification number; and
configuring a slice (601) of the fifth-generation network (400, 500), or allowing said slice to be configured, in response to the detected input of the personal identification number (114).

## Revendications

1. Appareil de communication mobile (110), sur lequel une pluralité d'applications (121, 122, 123, 124) peuvent être exécutées, chaque application pouvant être déverrouillée au moyen d'un numéro d'identification d'application (131, 132, 133, 134), dans lequel l'appareil de communication présente un module d'identité d'abonné SIM (112) auquel est affecté un numéro d'identification personnel SIM-PIN, comportant
une interface utilisateur (113) destinée à la détection d'une entrée du numéro d'identification personnel (114) du module d'identité d'abonné SIM (112) ; et
un processeur (111) qui est agencé pour, en réaction à l'entrée détectée du numéro d'identification personnel (114), déverrouiller automatiquement au moins une application de la pluralité d'applications (121, 122, 123, 124) au moyen du numéro d'identification d'application (131, 132, 133, 134) qui est affecté à l'au moins une application , pour exécuter l'au moins une application,
dans lequel le processeur (111) est agencé pour, en réaction à l'entrée détectée du numéro d'identification personnel (114), constituer un canal de communication (615) par le biais d'un réseau d'une cinquième génération 5G (400, 500) et pour déverrouiller ou faire déverrouiller une application (403) du réseau 5G (400, 500),
dans lequel le processeur (111) est également agencé pour, en réaction à l'entrée détectée du numéro d'identification personnel (114), configurer ou faire configurer une tranche (601) du réseau de la cinquième génération (400, 500).

2. Appareil de communication mobile (110) selon la revendication 1,
dans lequel le processeur (111) est agencé pour, en réaction à l'entrée détectée du numéro d'identification personnel (114), déverrouiller automatiquement chaque application de la pluralité d'applications (121, 122, 123, 124) au moyen du numéro d'identification d'application (131, 132, 133, 134) qui est affecté à l'application respective.

3. Appareil de communication mobile (110) selon la revendication 1 ou 2,
dans lequel le processeur (111) est agencé pour transmettre le numéro d'identification d'application respectif à l'application (121, 122, 123, 124) respective pour déverrouiller l'application respective.

4. Appareil de communication mobile (110) selon l'une des revendications précédentes,
dans lequel le processeur (111) est agencé pour, après le déverrouillage de l'au moins une application au moyen du numéro d'identification d'application, lancer les applications (121, 122, 123, 124) restantes et les déverrouiller au moyen du numéro d'identification personnel.

5. Appareil de communication mobile (210) selon l'une des revendications précédentes, comportant :
une mémoire (216) dans laquelle les numéros d'identification d'application (131, 132, 133, 134) de la pluralité d'applications (121, 122, 123, 124) sont stockés, et
dans lequel le processeur (111) est agencé pour extraire de la mémoire (216) les numéros d'identification d'application (131, 132, 133, 134) pour le déverrouillage des applications (121, 122, 123, 124).

6. Appareil de communication mobile (210) selon l'une des revendications précédentes,
dans lequel chaque application de la pluralité d'applications (121, 122, 123, 124) dispose d'un propre PIN secondaire au moyen duquel elle peut être déverrouillée, et
dans lequel le numéro d'identification personnel est un PIN maître avec lequel tous les PIN secondaires peuvent être déverrouillés.

7. Appareil de communication mobile (210) selon l'une des revendications précédentes,
dans lequel le processeur (111) est agencé pour, en réponse à une correspondance du PIN (114) détecté avec le PIN affecté au module d'identité d'abonné (112), déverrouiller l'au moins une application (121, 122, 123, 124).

8. Appareil de communication mobile (210) selon la revendication 7, comportant :
une interface de gestion (217) qui est agencée pour recevoir le PIN, affecté au module d'identité d'abonné (112), de la part d'un opérateur de réseau, en particulier par le biais d'un SMDP, serveur Subscription Manager Data Preparation (250).

9. Appareil de communication mobile (210) selon la revendication 8,
dans lequel l'interface de gestion (217) comprend une connexion hardware qui est agencée pour déposer le PIN reçu, qui est affecté au module d'identité d'abonné, en contournant le processeur (111), dans une zone cryptée de l'appareil de communication mobile (210).

10. Appareil de communication mobile (210) selon l'une des revendications précédentes,
dans lequel la pluralité d'applications (121, 122, 123, 124) comprennent ce qui suit :
des programmes d'application, services, configurations, accès à des supports de mémoire, accès à des serveurs, accès à des appareils de communication, applications destinées à la commande d'accès au réseau, en particulier des applications USIM, CSIM, ISIM ; NFC.

11. Appareil de communication mobile (210) selon l'une des revendications précédentes, comportant :
un eUICC, circuit de commutation embedded Universal Integrated Circuit Card, sur lequel le module d'identité d'abonné (SIM) (112) est mis en oeuvre.

12. Procédé (700) de déverrouillage d'au moins une application sur un appareil de communication mobile sur lequel une pluralité d'applications peuvent être exécutées, chaque application pouvant être déverrouillée au moyen d'un numéro d'identification d'application, dans lequel l'appareil de communication présente un module d'identité d'abonné SIM auquel est affecté un numéro d'identification personnel PIN, consistant à :
la détection (701) d'une entrée du numéro d'identification personnel du module d'identité d'abonné ;
le déverrouillage automatique (702) d'au moins une application de la pluralité d'applications au moyen du numéro d'identification d'application qui est affecté à l'au moins une application, en réaction à l'entrée détectée du numéro d'identification personnel pour exécuter l'au moins une application; et
la constitution d'un canal de communication par le biais d'un réseau d'une cinquième génération 5G (400, 500) et le déverrouillage ou autorisation de déverrouillage d'une application (403) du réseau 5G (400, 500) en réaction à l'entrée détectée du numéro d'identification personnel ; et
la configuration ou autorisation de configuration d'une tranche (601) du réseau de la cinquième (400, 500) génération en réaction à l'entrée détectée du numéro d'identification personnel (114).
